# DEMANDE DE BREVET EUROPEEN

(11) **EP 4 542 131 A1**
(43) Date de publication de la demande: **23.04.2025**
(21) Numéro de dépôt: 24207595.0
(22) Date de dépôt: 18.10.2024
(51) Int. Cl.: F24S 25/35, F24S 25/636, F24S 25/632, F24S 25/67, H02S 20/20, F24S 25/60, F24S 25/00

(54) **STRUCTURE LATERALE POUR FIXATION DE PANNEAUX SUR UNE STRUCTURE PORTEUSE**

(30) Priorité: 20.10.2023 FR 2311430
(71) Demandeur: Gagnepark, 69007 Lyon (FR)
(72) Inventeur: FRAUD, Christophe, 69007 LYON (FR)
(74) Mandataire: Cabinet Beau de Loménie

(57) **Abrégé**

Structure latérale (10) pour une ossature (3) pour panneaux comprenant un profilé de support (100) comprenant deux premières plages d'appui (107) destinées à être fixées sur la structure porteuse (2) et à partir desquelles s'élève pour chacune une paroi (110) qui intègrent chacune des ailes de réception (1111, 1112) reliées entre elles de sorte à former une partie mâle (111),
un profilé de fixation (200), comprenant une âme (205) à partir de laquelle s'étend au moins une aile de maintien (202), et des ailes de serrage (2061, 2062) en regard l'une de l'autre, le profilé de fixation étant maintenu inséré sur la partie de réception, les ailes de réception de réception étant prises en sandwich entre les ailes de serrage.

## Description

La présente invention concerne le domaine technique de la fixation de panneaux en particulier solaires sur des ouvrages au sens général et en particulier sur les toits des bâtiments.

L'objet de l'invention trouve des applications pour la couverture d'ouvrages destinés à assurer la protection des personnes, des animaux, des biens ou des activités comme par exemple des aires de jeu, des bâtiments ouverts non isolés, etc. Une application particulièrement avantageuse de l'invention concerne la couverture d'une zone de stationnement ou de parking à l'aide d'ombrières pour à la fois protéger ces zones de stationnement des intempéries et produire de l'énergie électrique à l'aide de panneaux solaires, classiquement des panneaux photovoltaïques.

L'art antérieur a proposé diverses techniques pour fixer des panneaux sur un toit d'un bâtiment.

Par exemple, le brevet FR 2965041 décrit un système modulaire formant un champ solaire et une couverture pour réaliser la production d'énergie solaire. Ce système modulaire est destiné à être fixé sur une structure porteuse ou une ossature comportant des poteaux supportant des solives et des poutres. Le système modulaire comporte une armature de support des panneaux solaires fixée sur la structure porteuse. L'armature de support comporte des poutres longitudinales sur lesquelles sont fixées à l'aide de systèmes vis/écrou, des traverses supportant les panneaux solaires.

Un tel système modulaire donne satisfaction en pratique car il permet un assemblage en atelier, au préalable de l'implantation de l'installation sur la structure porteuse, de sorte qu'il est possible de transporter sur le site, le système modulaire pré-monté afin d'être installé rapidement sur la structure porteuse. Cependant, en cas de changement de l'un de ces panneaux, l'opération nécessite l'intervention par le dessus des panneaux, conduisant à une opération délicate à mener à bien sans risque d'endommager les panneaux.

La demande de brevet WO 2012116223 décrit un système de support et de fixation des panneaux solaires comportant des poutres support sur lesquelles sont ancrés des plots de fixation présentant chacun un disque d'appui pour les panneaux. Un étrier est emmanché sur une tige filetée s'élevant en saillie à partir du disque. L'étrier comporte une branche venant serrer le panneau lors de la fixation de l'étrier par un écrou se vissant sur l'extrémité libre de la vis. Pour un tel système de support, le changement de l'un de ces panneaux nécessite aussi l'intervention par le dessus des panneaux.

Pour résoudre les inconvénients exposés ci-dessus, il a été proposé dans le brevet FR 3094158 un système de pré-positionnement entre un profilé supérieur sur lequel un panneau est destiné à être solidarisé, et un profilé inférieur destiné à être rattaché à une panne d'une ossature de fixation.

Le pré-positionnement est réalisé par l'intermédiaire de crans disposés sur le profil supérieur destinés à coopérer avec des crans arrangés sur le profil inférieur.

La réalisation d'une multiplicité de crans est volontaire, car permet non seulement de pouvoir ajuster la force de serrage du profilé supérieur sur le profilé inférieur, mais également d'avoir une redondance pour le cas où un cran venait à céder.

La fabrication de tels crans est tout à fait envisageable lorsque les profilés sont réalisés en aluminium. En effet, l'obtention des profilés s'effectue par extrusion d'aluminium visqueux, c'est-à-dire dans une phase entre liquide et solide, au sein de matrices, un tel procédé qui jusqu'à peu, était relativement économique à mettre en oeuvre.

Cependant, compte-tenu de la hausse récente du prix des matières premières, en particulier de l'aluminium, il est de plus en plus recherché de pouvoir réaliser les pièces en acier. Un tel matériau présente un coût inférieur à celui de l'aluminium.

Or, il est recherché la fabrication de pièces en acier réalisable par pliage, puisque l'extrusion de l'acier n'est pas, d'un point de vue industriel, réaliste notamment en raison de son coût et de sa complexité. Cependant, la forme des profilés est difficilement conservable par un tel changement de procédé de fabrication, notamment de l'extrême complexité de réaliser des crans par procédé de pliage.

En outre, le fait d'avoir une multiplicité de crans ne facilite pas la mise en place pour les monteurs, et nécessite une attention toute particulière de ceux-ci pour ne pas se tromper sur le nombre de cran à faire coopérer pour permettre le serrage du panneau entre les deux profilés.

L'invention se propose de répondre aux inconvénients précités.

Un premier objet est de proposer une structure latérale pour ossature de support permettant d'être réalisée en matériau acier, et utilisant le procédé de pliage.

Un deuxième objet est de proposer une telle structure latérale, permettant de contrôler et diriger l'évacuation d'eau.

Un troisième objet est de proposer une telle structure latérale, permettant que les opérations de montage et de démontage des panneaux puissent intervenir sans intervention humaine sur les panneaux.

A ce titre, il est prévu en premier lieu, une structure latérale pour une ossature de support et de fixation pour panneaux notamment solaire, l'ossature étant destinée à être fixée sur une structure porteuse, la structure latérale comprenant un profilé de support comprenant deux premières plages d'appui destinées à être fixée sur la structure porteuse et à partir desquelles s'élève pour chacune une paroi, chaque paroi intégrant une première aile de réception, et une deuxième aile de réception, les ailes de réception étant reliées entre elles au niveau d'une zone en saillie, de sorte à former une partie mâle, un profilé de fixation, comprenant une âme à partir de laquelle s'étend au moins une aile de maintien, et une première aile de serrage ainsi qu'une deuxième aile de serrage, les ailes de serrage étant en regard l'une de l'autre, le profilé de fixation étant maintenu inséré sur la partie mâle, la première aile de réception et la deuxième aile de réception étant prises en sandwich entre les ailes de serrage.

Selon un mode de réalisation, la première aile de serrage et la deuxième aile de serrage présentent chacune respectivement une forme complémentaire respectivement à la première aile de réception et à la deuxième aile de réception.

Selon un mode de réalisation, au moins une des ailes de réception comprend un bossage complémentaire à un creux d'une aile de serrage, l'insertion du profilé de fixation sur la partie mâle provoquant successivement une poussée déformant l'aile de serrage puis un encliquetage de l'aile de serrage sur l'aile de réception.

Selon un mode de réalisation, une deuxième plage d'appui est reliée à une aile de réception par le biais d'un angle arrondi formant une gorge.

Selon un mode de réalisation, une aile de réception comprend une portion soyée.

Selon un mode de réalisation, la première aile de réception comprend une première terminaison sensiblement rectiligne, et la deuxième aile de réception comprend une deuxième terminaison, les terminaisons étant connectées entre elles de manière à définir un sommet formant une zone en saillie.

Selon un mode de réalisation, elle comprend un moyen de fixation boulonné et une plaquette dotée d'un orifice, le moyen de fixation boulonnée comprenant une tige traversant un trou ménagé sur l'âme, une perforation prévue au niveau de la zone en saillie, de manière à contribuer à verrouiller le profil de fixation sur le profil de support.

Selon un mode de réalisation, la tige filetée est munie d'une tête de vis hexagonale, le profilé de fixation étant muni au niveau de la zone de saillie d'une entaille comprenant des bords confondus avec un plan vertical, l'entaille étant configurée pour permettre le blocage de la tête de vis par les bords, les bords comprenant des extrémités à cran.

Selon un mode de réalisation, les parois comprennent entre la partie mâle et la première plage d'appui, une partie inclinée et une partie de liaison, la structure latérale comprend en outre un moyen de renfort placé entre les premières plages d'appui, le moyen de renfort étant apte à récupérer un effort visant à rapprocher les parois entre elles.

Selon un mode de réalisation, le moyen de renfort comprend un pontet intégrant des pans latéraux entre eux par un pan central, le pan central étant pourvu d'un perçage permettant l'introduction d'une vis de fixation configurée pour coopérer avec un écrou de fixation de sorte à permettre de solidariser le profilé de support sur la structure porteuse, les pans latéraux comprenant des premiers trous alésés coaxiaux avec des deuxièmes trous alésés réalisés dans chaque partie de liaison permettant le passage d'un moyen de serrage configuré pour plaquer respectivement chaque pan latéral contre une partie de liaison.

Selon un mode de réalisation, le moyen de renfort comprend un pontet comprenant des pans latéraux munis de bords retournés s'insérant dans des fenêtres prévues à cet effet dans les parties de liaison, les pans latéraux étant liés entre eux par un pan central, le pan central étant doté d'un perçage de manière à pouvoir introduire une vis de fixation configurée pour coopérer avec un écrou de fixation, permettant de solidariser le profilé de support sur la structure porteuse.

Selon un mode de réalisation, le moyen de renfort comprend une pièce massive pleine intégrant un évidement permettant le passage d'une vis de fixation, apte à coopérer avec un écrou de fixation, la pièce massive présentant un contour épousant la forme de l'angle entre la portion inclinée et la portion de liaison.

En deuxième lieu, il est prévu une ombrière comprenant une structure de support, une ossature support et de fixation pour panneaux notamment solaires, l'ossature de support et fixation comprenant une structure latérale permettant la fixation de l'ossature sur la structure porteuse.

D'autres caractéristiques et avantages de l'invention apparaîtront plus clairement et de manière concrète à la lecture de la description ci-après de modes de réalisation, donnée à titre d'exemple non limitatif, et faite en référence aux dessins annexés dans lesquels :
[Fig.1] La figure 1 est une vue schématique de côté d'un exemple de réalisation d'une structure porteuse équipée d'une ossature de support et de fixation pour panneaux conforme à l'invention ;
[Fig.2] La figure 2 est une vue schématique de face de la structure porteuse illustrée à la figure 1 ;
[Fig.3] La figure 3 est une vue de côté schématique à plus grande échelle d'une partie de l'ossature de support et de fixation pour panneaux conforme à l'invention ;
[Fig.4] La figure 4 est une vue schématique en perspective d'un mode de réalisation d'une structure latérale de support et de fixation pour panneaux, représentée en position de pré-montage ;
[Fig.5] La figure 5 est une vue schématique en perspective d'un mode de réalisation de la structure latérale de support et de fixation pour panneaux, représentée en position de pré-montage ;
[Fig.6] La figure 6 est une vue schématique en coupe selon le plan transversal B-B de la figure 4, représentant un mode de réalisation de la structure latérale de support et de fixation pour panneaux, la structure latérale étant représentée en position de pré-montage ;
[Fig.7] La figure 7 est une vue schématique en coupe selon le plan transversal B-B de la figure 4 représentant un mode de réalisation de la structure latérale de support et de fixation pour panneaux, la structure latérale étant représentée en position de pré-montage, les panneaux étant positionnés entre la structure latérale et l'ossature ;
[Fig.8] La figure 8 est une vue schématique en coupe selon le plan transversal B-B de la figure 4 représentant un mode de réalisation de la structure latérale de support et de fixation pour panneaux, la structure latérale étant représentée en position montée ;
[Fig.9] La figure 9 est une vue schématique en coupe selon le plan transversal A-A de la figure 4 d'une structure latérale selon un mode de réalisation ;
[Fig.10] La figure 10 est une vue schématique en coupe selon le plan transversal A-A de la figure 4 d'une structure latérale selon un mode de réalisation ;
[Fig.11] La figure 11 est une vue schématique en coupe selon le plan transversal A-A de la figure 4 d'une structure latérale selon un mode de réalisation ;
[Fig.12] La figure 12 est une vue schématique vue en coupe selon le plan transversal A-A de la figure 4 d'une structure latérale selon un mode de réalisation ;
[Fig.13] La figure 13 est une vue schématique en coupe selon le plan transversal A-A d'une structure latérale selon un mode de réalisation ;
[Fig.14] La figure 14 est une vue schématique en coupe selon le plan transversal A-A d'un profilé de support ;
[Fig.15] La figure 15 est une vue schématique en coupe selon le plan transversal A-A d'un profilé de fixation.

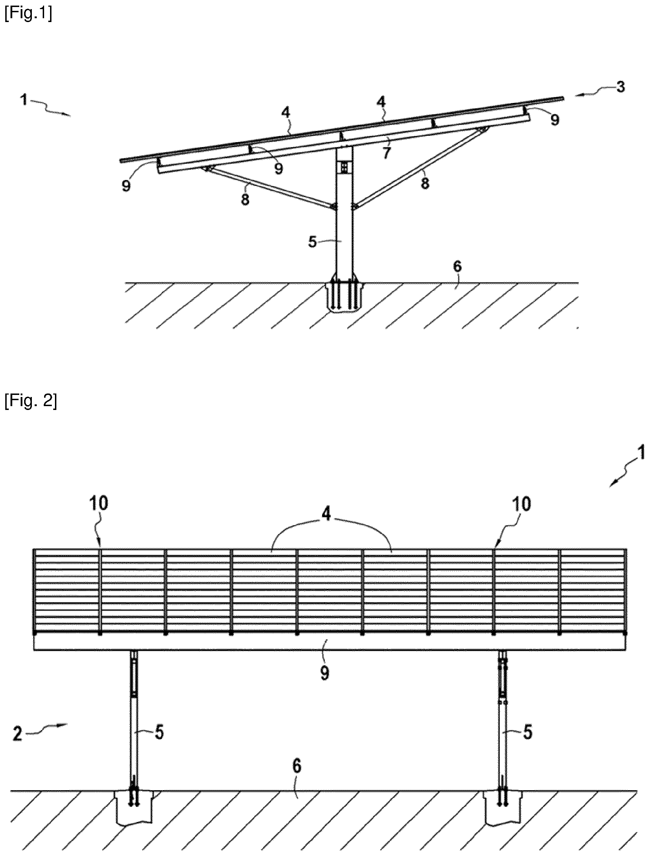

Les figures 1 à 3 illustrent un exemple de réalisation d'un ouvrage de protection 1, constituant un bâtiment ouvert tel qu'une ombrière dans l'exemple illustré.

Un tel ouvrage 1 comprend une structure porteuse 2 sur laquelle est montée une ossature de support et de fixation 3 destinée à assurer le montage de panneaux 4, de tous types présentant un cadre rigide au sens général, tels des panneaux de protection ou décoratifs ou de préférence des panneaux solaires ou panneaux photovoltaïques.

Selon un tel exemple de réalisation, un tel ouvrage 1 permet de protéger en dessous de la surface couverte par les panneaux, une zone de stationnement ou de circulation, tout en produisant de l'énergie électrique à l'aide des panneaux photovoltaïques.

Dans l'exemple illustré, la structure porteuse 2 comporte d'une manière générale, des poteaux 5 ancrés dans le sol 6 et des poutres 7 supportées par les poteaux 5 et par des arbalétriers 8 montés obliquement entre le poteau 5 et chaque extrémité de la poutre 7.

Les poutres 7 sont avantageusement montées comme cela apparaît plus précisément à la figure 1 en étant inclinées par rapport au sol 6 de manière que l'ouvrage forme un versant incliné présentant une partie basse et une partie haute, considérées par rapport au sol 6. Les poutres 7 sont destinées à supporter des pannes longitudinales 9 sur lesquelles est destiné à être fixée l'ossature 3 conforme à l'invention.

La description de l'ouvrage 1 est donnée uniquement à titre indicatif. Bien entendu, l'ouvrage 1 peut présenter une configuration différente en comportant plusieurs versants par exemple. De même, la structure porteuse 2 qui comporte dans l'exemple illustré, les poteaux 5, les poutres 7, les arbalétriers 8 et les pannes longitudinales 9 peut être réalisée de manière différente de celle illustrée. Il doit être compris que l'ouvrage 1 et la structure porteuse 2 ne font pas partie précisément de l'objet de l'invention.

L'objet du présent texte concerne plus particulièrement l'ossature 3 permettant le support et la fixation des panneaux 4 sur la structure porteuse 2. Une telle ossature 3 comprend au moins deux structures latérales 10, écartées entre elles pour permettre le montage d'au moins une rangée de panneaux 4.

L'on définit par rapport à la structure 2 un repère orthogonal XYZ comprenant trois axes perpendiculaires deux à deux, à savoir :
- un axe X, confondu avec la direction d'extension de la structure latérale 2, définissant une direction longitudinale ;
- un axe Y, définissant une direction transversale, horizontale, qui avec l'axe X définit un plan XY horizontal ;
- un axe Z, définissant une direction verticale, perpendiculaire au plan XY horizontal.

Comme cela est décrit en détail dans la suite de la description, les structures latérales 10 constituent notamment des structures de forme allongée s'étendant parallèlement entre elles selon l'inclinaison du versant de l'ouvrage.

Dans l'exemple illustré plus précisément à la figure 2, douze panneaux 4 formant une rangée sont montés entre deux structures latérales 10 voisines et dix structures latérales 10 sont montées pour supporter neuf rangées de panneaux 4. Bien entendu, l'ossature 3 peut comporter un nombre de structures latérales 10 différentes de celles illustrées et supporter entre elles un nombre de panneaux 4 différent par rangée.

Avantageusement, une telle ossature 3 comprend un système 11 de blocage transversal des panneaux 4, c'est-à-dire qu'un tel système 11 assure un blocage ou un arrêt des panneaux 4 selon une direction perpendiculaire à la direction d'extension des structures latérales 10.

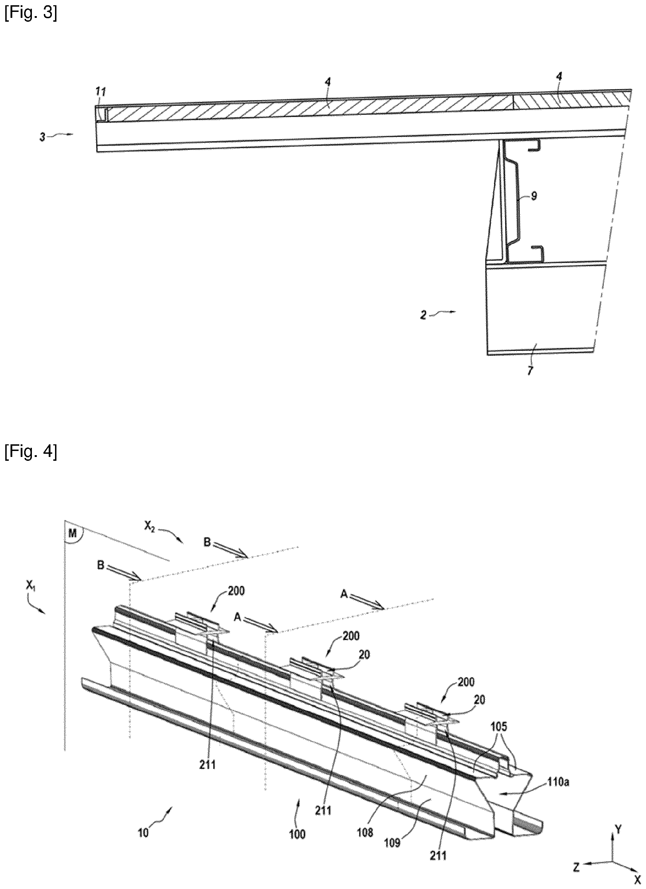

Un tel système de blocage transversal 11 peut être réalisé de toute manière appropriée. Dans l'exemple illustré à la figure 3, ledit système de blocage transversal 11 comporte des traverses s'étendant entre deux structures latérales voisines 10 et fixées à chacune des deux extrémités, à ces deux structures latérales 10. Les panneaux 4 situés à chaque extrémité d'une rangée sont bloqués par ces deux traverses 11.

En tant que système de blocage transversal 11, il peut être prévu d'utiliser à la place des traverses, des butées fixées sur les structures latérales 10 et sur lesquelles sont en appui les bords extérieurs des panneaux 4 situés à chaque extrémité d'une rangée. Un tel système de blocage transversal 11 est mis en oeuvre dans la partie basse du versant et de préférence mais non obligatoirement également à la partie haute du versant pour bloquer ainsi tous les panneaux d'une rangée.

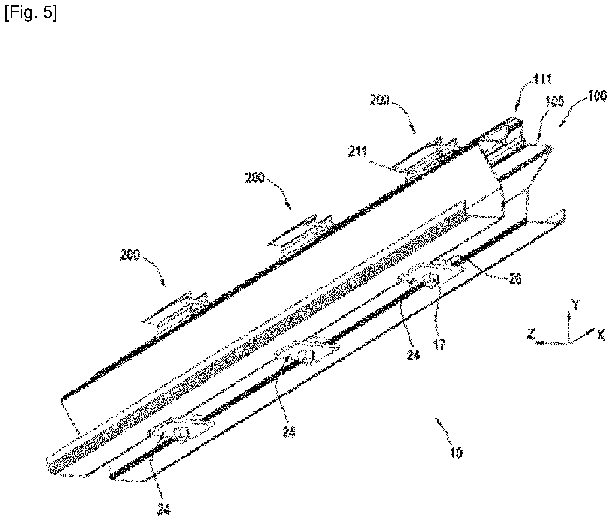

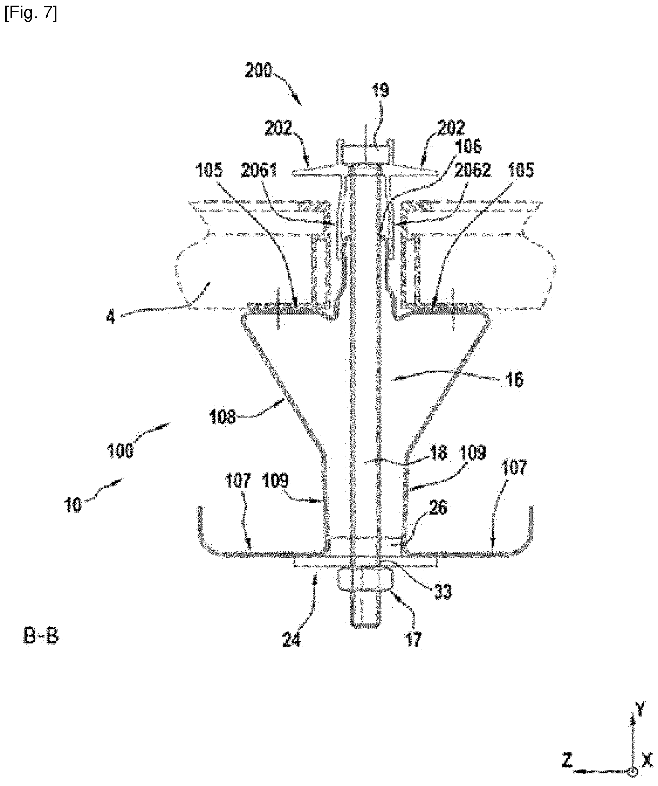

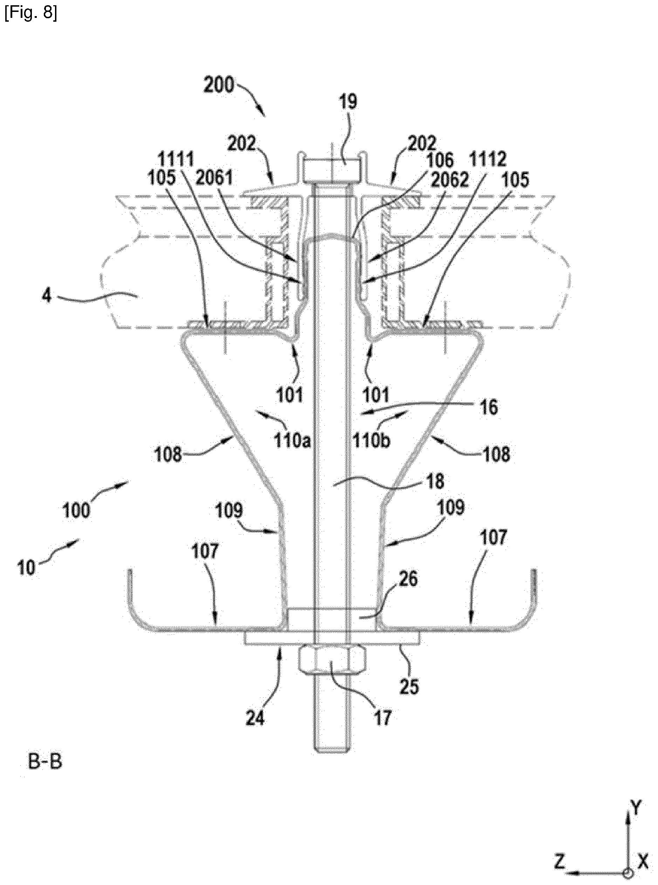

Comme il peut être observé sur les figures 4 à 8, une structure latérale 10 comprend au moins un profilé de support 100 et au moins un profilé de fixation 200, destinés à être assemblés entre eux, de manière à permettre de prendre en sandwich un panneau 4, par emboîtement du profilé de fixation 200 sur le profilé de support 100.

Plus spécifiquement, le profilé de support 100 comprend une partie mâle 111, destinée être chapeautée par une partie femelle 211 ménagée au sein du profilé de fixation 200. Ainsi, au gré de la position du profil de support 100 vis-à-vis du profilé de fixation 200, la structure latérale 10 évolue entre plusieurs configurations de montage représentées sur les figures 4 à 8.

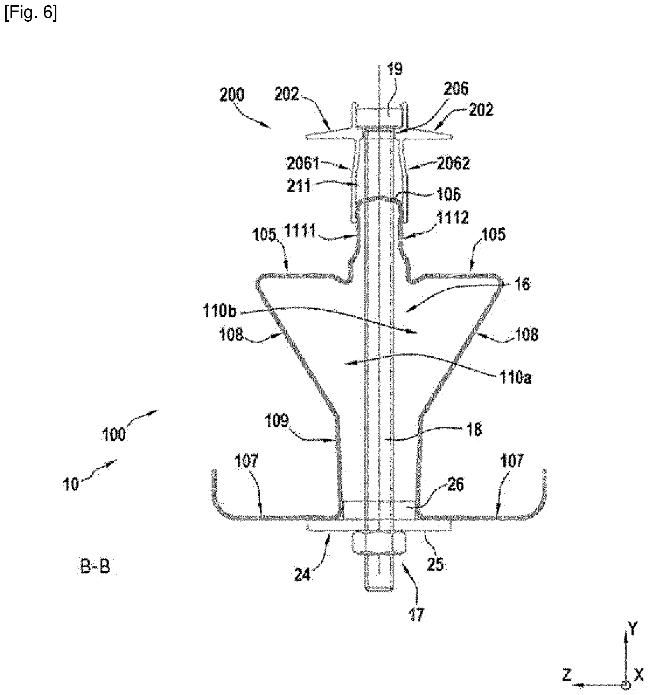

Dans une configuration de pré-montage représentée figure 6, le profilé de fixation 200 est emboîté et encliqueté sur le profilé de support 100 comme décrit plus loin dans le présent texte.

Une telle configuration est tout à faire intéressante, car elle permet aux opérateurs de fixer sur la structure porteuse 2 au sol l'ensemble des structures latérales 10, évitant de réaliser en hauteur une telle opération. Le montage s'en retrouve facilité, le temps où les opérateurs sont en hauteur est réduit, offrant un gain de temps, de sécurité et financier.

Une fois en configuration de pré-montage et fixé sur la structure porteuse 2, chaque panneau 4 est glissé dans un espacement de positionnement formé par une aile de maintien 202 du profilé de fixation 200, et une deuxième plage d'appui 105 du profilé de support 100.

Dans une configuration montée, l'espacement de positionnement est réduit par diminution de la distance entre l'aile de maintien 202 et la deuxième plage d'appui 105 en abaissant le profil de fixation 200 en butée contre le profilé de support 100. De la sorte, le panneau 4 peut être maintenu serré entre les deux profilés 100, 200, permettant son montage définitif.

Comme il peut être observé sur les modes de réalisation représentés, la structure latérale 10 est avantageusement une pièce présentant un plan de symétrie vertical, définissant deux pans X1, X2. Une telle configuration permet d'équilibrer les charges au sein de la structure latérale 10.

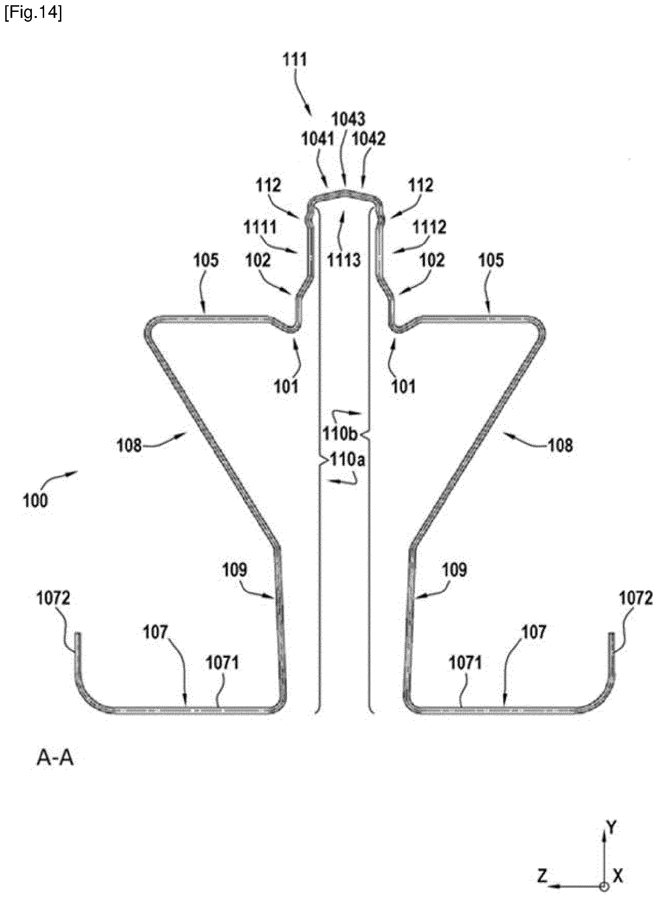

L'on décrit à présent plus spécifiquement la géométrie du profilé de support 100 en se référant aux figures 4 à 12, mais plus particulièrement à la figure 14.

Comme il peut être observé, le profilé de support 100 prend avantageusement la forme d'une poutre rigide destinée à être fixée sur la structure porteuse 2 et à supporter une rangée de panneaux 4.

Comme il peut être constaté sur les figures, le profilé de support 100 comprend préférentiellement deux premières plages d'appui 107, qui comme expliqué précédemment sont destinées à être fixées sur la structure porteuse 2.

Avantageusement, les premières plages d'appui 107 s'étendent en définissant un plan permettant de constituer un appui suffisamment pour le panneau 4.

Tel qu'il peut être observé, à partir d'une première plage d'appui 107 s'élève une première paroi 110a, intégrant la partie mâle 111, qui comme expliqué précédemment est destinée à recevoir la partie femelle 211 du profilé de fixation 200.

Comme il peut être observé en particulier sur la figure 14, la partie mâle 111 définit avantageusement une première aile de réception 1111, et une deuxième aile de réception 1112, reliées entre elles, conférant à la partie mâle 111 une zone en saillie 1113.

En d'autre terme, et plus spécifiquement, la première paroi 110a intègre par exemple la première aile de réception 1111, et la deuxième paroi 110b intègre la deuxième aile de réception 1112, les ailes de réception 1111, 1112 étant reliées entre elles au niveau de la zone en saillie 1113 formant la partie mâle 111.

Avantageusement, le profilé de support 100 comprends deux premières plages d'appui 107 destinées à être fixées sur la structure porteuse 2 et à partir desquelles s'élève pour chacune une paroi 110a, 110b, chaque paroi 110a, 110b intégrant une première aile de réception 1111, et une deuxième aile de réception 1112, les ailes de réception 1111, 1112 étant reliées entre elles au niveau de la zone en saillie 1113, de sorte à former la partie mâle 111.

Plus spécifiquement, et comme il apparaît sur la figure 14, la première aile de réception 1111 comprend une première terminaison 1041, et la deuxième aile de réception 1112 comprend une deuxième terminaison 1042, les terminaisons 1041, 1042 étant avantageusement connectées entre elles de manière à définir un sommet 1043.

Avantageusement, les terminaisons 1041, 1042 des ailes de réception 1112, 1113 présentent une courbure telle de sorte à ce que la zone en saillie 1113 définisse une courbure convexe, permettant de favoriser l'écoulement de l'eau lorsque la structure latérale 10 est montée sur la structure porteuse 2.

Les parois 110a, 110b sont en métal, par exemple l'acier, et pliées, c'est-à-dire mis en forme par pliage.

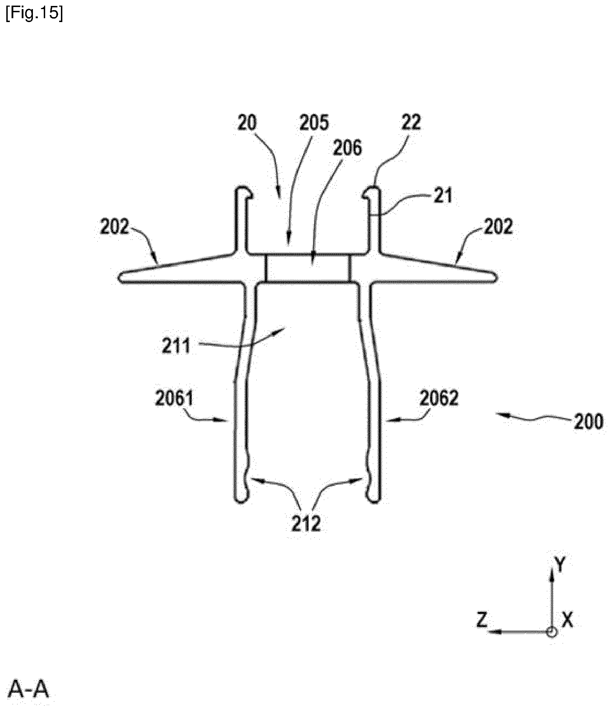

L'on décrit à présent plus spécifiquement la géométrie du profilé de fixation 200 en se référant aux figures 4 à 13, mais plus particulièrement à la figure 15.

Avantageusement, le profilé de fixation 200 comprend une âme 205 à partir de laquelle s'étendent au moins une aile de maintien 202, préférentiellement deux ailes de maintien 202, une première aile de serrage 2061 ainsi qu'une deuxième aile de serrage 2062. Les ailes de serrage 2061, 2062 sont en regard l'une de l'autre, et définissent avec l'âme 205, une alvéole formant la partie femelle 211.

Une telle géométrie permet l'emboîtement et le maintien du profilé de fixation 200 sur le profilé de support 100 c'est-à-dire plus particulièrement la partie mâle 111 sur la partie femelle 211. Plus particulièrement, la première aile de réception 1111 et la deuxième aile de réception 1112 étant prises en sandwich entre les ailes de serrage 2061, 2062. Ainsi, et comme il peut être observé sur les figures 4 à 8, le profilé de fixation 200 enfourche la partie mâle du profilé de support 100.

Grâce à une telle disposition, la mise en place des profilés 100, 200 l'un sur l'autre peut être effectuée de manière facile, rapide, réduisant considérablement tout risque d'erreur pour l'opérateur.

Afin de faciliter la réalisation de l'emboîtement des profilés 100, 200 l'un sur l'autre, les ailes de serrage 2061, 2062 présentent avantageusement une forme complémentaire à respectivement la première aile de réception 1111 et la deuxième aile de réception 1112.

De manière à permettre la mise de la structure latérale 10 en configuration de pré-montage, la structure latérale présente un moyen d'encliquetage 112, 212. Plus précisément au moins une des ailes de réception 1111, 1112, préférentiellement les deux ailes de réception 1111, 1112, comprennent un bossage 112 complémentaire à un creux 212 ménagé sur une aile de serrage 2061, 2062.

De manière préférentielle, et de manière à obtenir un effort symétrique, chacune des ailes de réception 1111, 1112 comprend un bossage 112, et chacune des ailes de serrage 2061, 2062 comprend un creux 212.

Grâce à une telle caractéristique, une insertion du profilé de fixation 200 sur la partie mâle 111 provoque successivement une poussée déformant l'aile de serrage 2061, 2062 en contact avec l'aile de réception concernée 1111, 1112 puis un encliquetage de ladite aile de serrage 2061, 2062 sur ladite aile de réception 1111, 1112.

Il est à noter qu'il est prévu pour une aile de réception 1111, 1112 un unique bossage 112 et pour une aile de serrage 2061, 2062, un unique creux 212. Ainsi, cela permet de faciliter le pré-montage, puisque un unique moyen d'encliquetage 112, 212 suffit à indiquer à l'opérateur le bon emboîtement des profilés 100, 200 entre eux. En d'autres termes, le bossage 112 et le creux 212 lorsqu'ils coopèrent agissent en tant que détrompeur pour un monteur.

En outre, il a été en effet constaté qu'en cas de fabrication des profilés par pliage, c'est-à-dire par usage d'une opération de pliage, un unique moyen d'encliquetage 112, 212 suffit pour réaliser la fonction d'emboitement, le moyen d'encliquetage présentant une robustesse suffisante pour considérer comme superflu l'ajout de redondance.

Avantageusement, les profilés 100, 200 sont symétriques par rapport à un plan vertical passant par le plan milieu M, ce qui permet d'obtenir des efforts équilibrés, et la fixation de panneaux 4 identiques de part et d'autre de la structure latérale 10.

Comme il peut être observé sur les figures, il est prévu une deuxième paroi 110b, symétrique à une première paroi par rapport au plan milieu, lequel est confondu à un plan vertical passant par le milieu de la partie mâle 111, et qu'une autre aile 202 soit disposée symétriquement un plan vertical passant par le milieu de l'âme 205.

De manière à permettre la réception d'un panneau 4, la deuxième plage d'appui 105 est avantageusement reliée à une aile de réception 1111, 1112 par le biais d'un angle arrondi formant une gorge 101.

Préférentiellement, il est prévu deux deuxièmes plages d'appui 105, chacune reliée respectivement à une aile de réception 1111, 1112 par le biais d'un angle arrondi formant une gorge 101.

La gorge 101 permet la récupération et la canalisation d'un excès d'eau ruisselant le long d'une paroi 110a, 110b, offrant la possibilité à la structure latérale 10 d'évacuer de manière optimale l'eau.

Avantageusement, la structure latérale 10 comprend entre les plages d'appuis 105, 107 une partie inclinée 108 et une partie de liaison 109. Comme il peut être observé sur les figures, la partie inclinée 108 est reliée à la deuxième plage d'appui 105, et la partie de liaison 109 est liée d'une part à la partie inclinée 108 et d'autre part à la première plage d'appui 107.

Plus spécifiquement, la deuxième plage d'appui 105 et la partie inclinée 108 définissent entre elles un angle aigu. En outre, la partie de liaison 109 s'étend sensiblement verticalement. De telles dispositions permettent de guider le ruissellement d'eau qui n'aurait pas été évacué par la gorge 101 vers la première plage d'appui 107.

Avantageusement, et comme visible en particulier sur la figure 14, la première plage d'appui 107 comprend une section proximale plane 1071 et une section recourbée 1072, ce qui évite le débordement d'eau qui aurait ruisselée sur ladite première plage d'appui 107.

Afin de permettre une mise en position du panneau 4 selon la direction transversale, une aile de réception 1111, 1112 comprend avantageusement une portion soyée 102.

Préférentiellement, chaque aile de réception 1111, 1112 comprend une portion soyée 102, permettant la mise en position de panneau 4 de part et d'autre de la structure latérale 10.

De manière à permettre l'immobilisation des panneaux 4 entre le profilé de support 100 et le profilé de fixation 200, la structure latérale 10 comprend un moyen de fixation boulonnée et une plaquette 24.

Comme il peut être vu sur la figure 6, une telle plaquette 24 présente un plat 25 doté d'un orifice 33 et au moins une rive 26 faisant saillie de ce plat, et entrant en contact avec les parois 110a, 110b. De cette façon, les parois sont maintenues à distance les unes des autres, empêchant une déformation du profilé de support au niveau des premières plages d'appui 107.

Dans les modes de réalisation représentés sur les figures, il est prévu en tant que moyen de fixation boulonné une vis 16 comprenant une tige filetée 18 et une tête de vis 19 qui s'insère dans une entaille 20 ménagée au sein de l'âme 205, visible distinctement sur les figures 4 et 15.

Classiquement, de manière à pouvoir réaliser un tel assemblage, une perforation 106 est arrangée sur la partie mâle 111 au niveau de la zone en saillie 1113, l'âme 205 est dotée d'un trou 206. De cette manière, une tige filetée 18 peut traverser l'orifice 33, la perforation 106 et le trou 206.

Plus particulièrement, et comme visible sur la figure 15, l'entaille 20 est formée par des bords 21 comprenant des extrémités à cran 22, et permet le blocage de la tête de vis 19, ce qui renforce le verrouillage exercé par la vis sur le profilé de fixation 200. De cette manière, la vis 16 ne peut pas ressortir après insertion dans le trou 206. La vis 16 est bloquée grâce à un contre-écrou 17 venant se positionner contre la plaquette 24.

Dans des variantes de réalisation non représentées, le profilé 200 de fixation est dépourvu d'entaille 20 et de contre-écrou 17, le trou 206 est fileté, le moyen de fixation boulonné étant formé par l'intermédiaire de la tige filetée 18 et l'âme 205 du fait du trou 206 fileté confère au profilé de fixation 200 un rôle d'écrou. La tête de vis 19 est, dans de telles variantes, disposée contre la plaquette 24.

Une telle variante de réalisation est intéressante, car permet d'éviter d'intervenir au-dessus des panneaux 4 lors du serrage du moyen de fixation boulonné. En outre, dans le cas d'utilisation d'une vis 16 présentant une forme hexagonale, il a été identifié un risque d'une mauvaise insertion de la tête de vis 19 au sein de l'entaille 20, du fait que la tête se positionne mal. Le fait d'inverser le sens du moyen de fixation boulonnée permet d'éviter la survenue d'un tel inconvénient.

L'on décrit à présent plus particulièrement la fixation de la structure latérale 10 sur la structure porteuse 2.

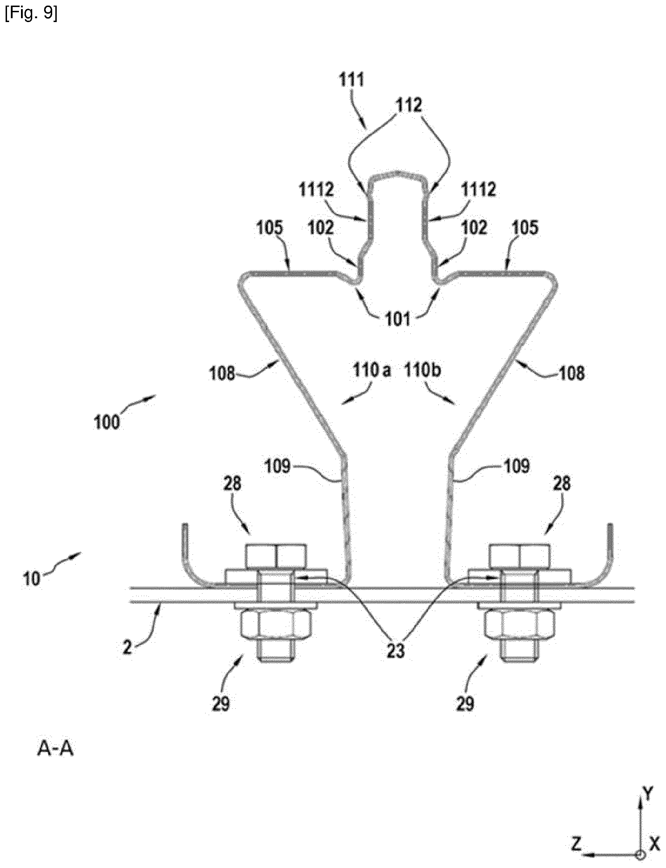

Dans un mode de réalisation représenté figure 9, la structure latérale 10 comprend deux alésages 23, formés dans chacune des premières plages d'appui 107, symétriquement l'un de l'autre par rapport au plan milieu M. De cette manière, au moins deux vis de fixation 28 peuvent être utilisées en coopération avec un écrou de fixation 29 pour solidariser le profilé de support 100 sur la structure porteuse 2. Un tel montage est aisément réalisable et ne nécessite pas la réalisation de pièces particulière.

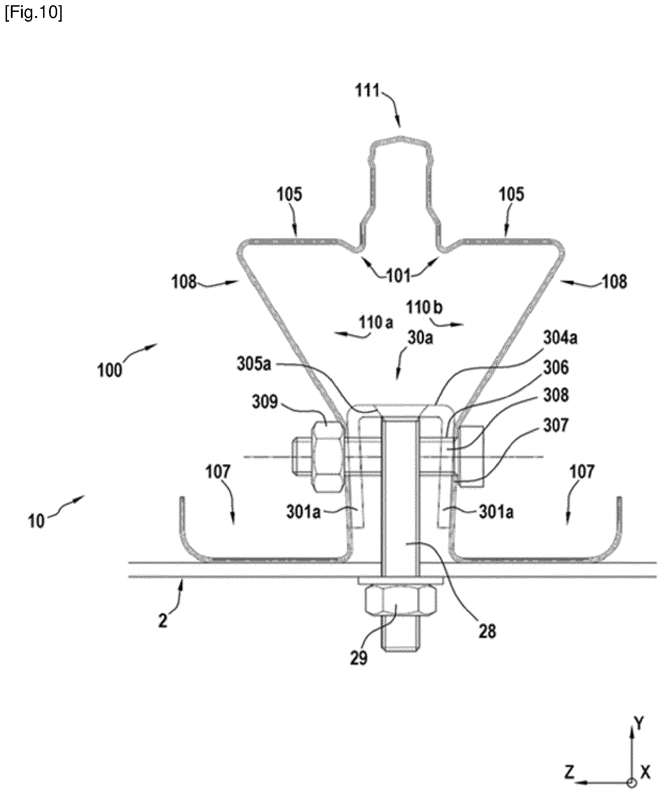

Dans les modes de réalisation représentés sur les figures 10 à 13, un moyen de renfort est utilisé. Un tel moyen de renfort se place entre les parois 110a, 110b, entrant au moins partiellement au contact des deux parois 110a, 110b, permettant la diffusion des efforts au sein du profilé de support 100, la rigidification du profilé de support 100, et la fixation de la structure latérale sur la structure porteuse 2.

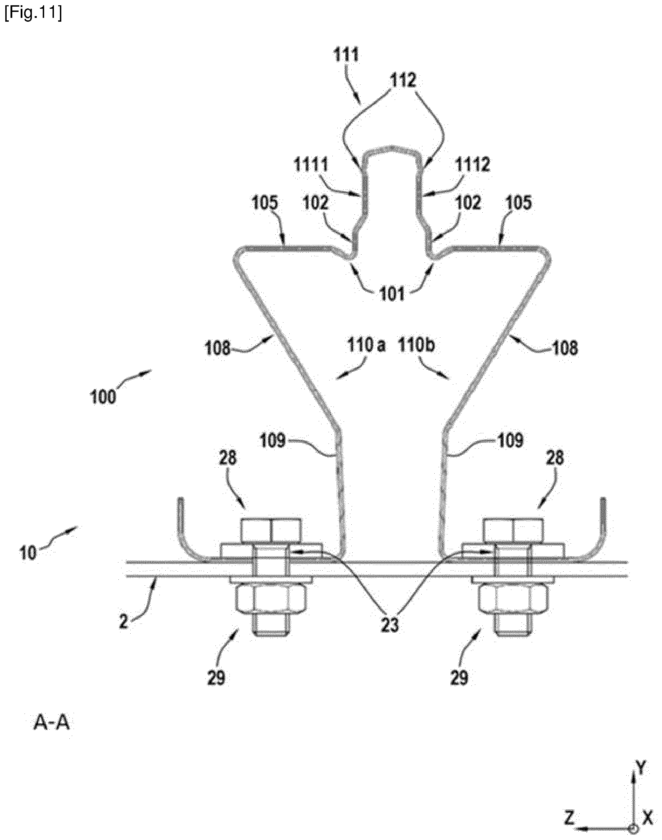

Dans les modes de réalisation représentés sur la figure 10 et sur la figure 11, le moyen de renfort comprend un pontet 30a, 30b, c'est-à-dire une pièce se présentant avantageusement sous la forme d'une plaque métallique pliée comprenant des pans latéraux 301a, 301b. De manière avantageuse, les pans latéraux 301a, 301b sont liés entre eux par un pan central 304a, 304b, lequel pan central 304a, 304b intègre un perçage 305a, 305b de manière à pouvoir introduire une vis de fixation 28. Une telle vis de fixation 28, qui en coopérant avec un écrou de fixation 29 assure la solidarisation du profilé de support 100 sur la structure porteuse 2.

Dans le mode de réalisation représenté sur la figure 10, le moyen de renfort comprend un pontet d'un premier type 30a, présentant par exemple la particularité que les pans latéraux 304a sont orientés en direction de la structure porteuse, et le pan central 304a est disposé entre les parties inclinées 108. Autrement dit, le pontet 30a définit une section transversale en forme de U inversé.

De manière à pouvoir exercer un effort sur les parois 110a, 110b, les pans latéraux 304a sont avantageusement munis de premiers trous alésés 306, et chaque partie de liaison 109 de deuxièmes trous alésés 307, coaxiaux. Il est ainsi possible de faire traverser les trous alésés 306, 307 d'un moyen de liaison, par exemple une vis de liaison 308, en coopération avec un écrou de liaison 309.

Avantageusement, le pontet 30a épouse la portion inclinée 108, évitant toute déformation du profilé 100, conférant une rigidité maximale à la structure latérale 10.

Grâce à un tel pontet 30a, les charges exercées par la structure porteuse 2 sur la structure latérale 10 sont réparties de part et d'autre du profilé de support 100 grâce aux trous alésés 306, 307. Il est permis ainsi d'éviter la survenue d'un phénomène de concentration de contrainte, et d'éviter une ruine locale au niveau d'une des parois 101.

En outre, un tel pontet 30a permet de maintenir la forme globale du profilé de support 100, en particulier lors du serrage de la structure latérale 10 sur le panneau 4, et de la solidarisation de la structure latérale 10 sur la structure porteuse 2.

Dans le mode de réalisation représenté sur la figure 11, le moyen de renfort comprend un pontet d'un deuxième type 30b, pour lequel les pans latéraux 301b comprennent des bords retournés 302 s'insérant dans des fenêtres 303b prévues à cet effet dans les parties de liaison 109. Le montage d'un tel pontet 30b limite l'utilisation d'outil.

Avantageusement, le pontet 30b épouse la portion de liaison 109, évitant toute déformation du profilé 100, conférant une rigidité maximale à la structure latérale 10.

Grâce à un tel pontet 30b, les charges exercées par la structure porteuse 2 sur la structure latérale 10 sont réparties de part et d'autre du profilé de support 100 par l'intermédiaire des fenêtres 303b. Il est permis ainsi d'éviter la survenue d'un phénomène de concentration de contrainte, et d'éviter une ruine locale au niveau d'une des parois 101.

En outre, un tel pontet 30b permet de maintenir la forme globale du profilé de support 100, en particulier lors du serrage de la structure latérale 10 sur le panneau 4, et de la solidarisation de la structure latérale 10 sur la structure porteuse 2.

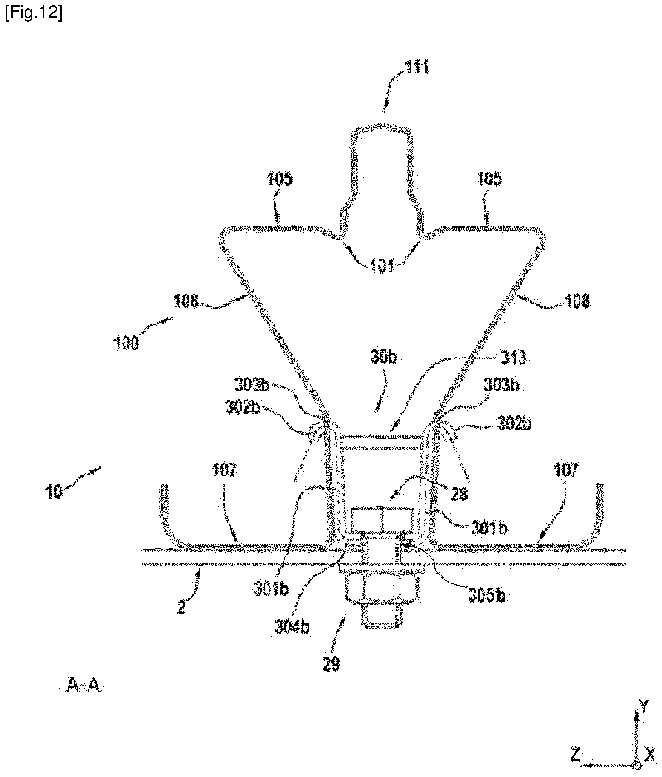

De manière à accroître davantage la rigidité du pontet 30b, il est prévu une variante représentée sur la figure 12, dans laquelle le pontet 30b est muni d'une barre de renfort 313 fixée à proximité des bords retournés 302. Les avantages associés à l'utilisation d'un pontet sont accrus.

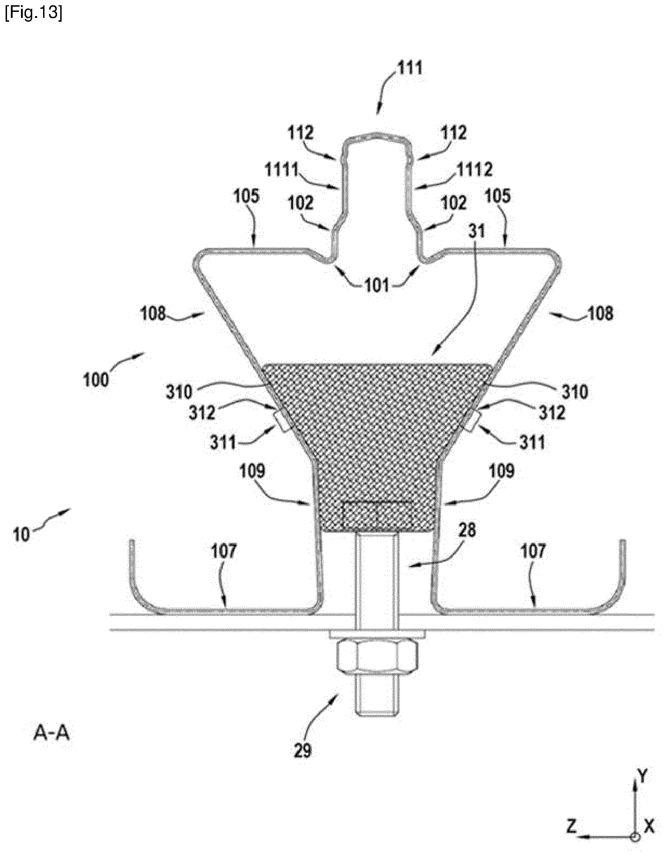

Dans les modes de réalisation représentés sur la figure 13, le moyen de renfort comprend une pièce massive 31, par exemple obtenue par moulage. Autrement dit, la pièce massive 31 est avantageusement pleine, à l'exception d'un évidement permettant le passage d'une vis de fixation 28, apte à coopérer avec un écrou de fixation 29.

Comme il peut être observé sur la figure 14, la pièce massive 31 présente un contour 310 épousant la forme de l'angle entre la portion inclinée et la portion de liaison 109, évitant toute déformation du profilé de support 100, conférant une rigidité maximale à la structure latérale 10.

Avantageusement, la pièce massive 31 comprend des parties saillantes 311 s'introduisant dans des jours 312 prévus au sein de chacune des parties inclinées 108, de manière à permettre la solidarisation de ladite pièce massive 31 avec le profilé de support 100. En outre, de telles parties saillantes permettent la bonne transmission d'effort au sein du profilé de support 100, limitant toute concentration de contrainte.

La structure latérale 10 décrite ci-dessus offre de nombreux avantages notamment :
- une facilité de montage nécessitant uniquement un apprentissage minimal ;
- une robustesse permettant d'offrir une durabilité maximale à toute ombrière pourvue d'une telle structure latérale 10 ;
- une prise en compte des intempéries grâce à des moyens d'évacuation de l'excès d'eau, ce qui évite toute stagnation d'eau, laquelle favorise la corrosion ;
- la possibilité de réaliser un profilé de support 100 et/ou le profilé de fixation 200 en utilisant une opération de pliage.

## Revendications

1. Structure latérale (10) pour une ossature de support et de fixation (3) pour panneaux notamment solaires (4), l'ossature (3) étant destinée à être fixée sur une structure porteuse (2), la structure latérale (10) comprenant :
- un profilé de support (100) comprenant deux premières plages d'appui (107) destinées à être fixées sur la structure porteuse (2) et à partir desquelles s'élève pour chacune une paroi (110a, 110b), une première paroi (110a) intégrant une première aile de réception (1111), et une deuxième paroi (110b) intégrant une deuxième aile de réception (1112), les ailes de réception (1111, 1112) étant reliées entre elles au niveau d'une zone en saillie (1113), de sorte à former une partie mâle (111),
- un profilé de fixation (200), comprenant une âme (205) à partir de laquelle s'étend au moins une aile de maintien (202), et une première aile de serrage (2061) ainsi qu'une deuxième aile de serrage (2062), les ailes de serrage (2061, 2062) étant en regard l'une de l'autre, le profilé de fixation (200) étant maintenu inséré sur la partie mâle (111), la première aile de réception (1111) et la deuxième aile de réception (1112) étant prises en sandwich entre les ailes de serrage (2061, 2062).

2. Structure latérale (10) selon la revendication précédente, **caractérisée en ce que** la première aile de serrage (2061) et la deuxième aile de serrage (2062) présentent chacune une forme complémentaire respectivement à la première aile de réception (1111) et à la deuxième aile de réception (1112).

3. Structure latérale (10) selon la revendication 1 ou 2, **caractérisée en ce qu'**au moins une des ailes de réception (1111, 1112) comprend un bossage (112) complémentaire à un creux (212) d'une aile de serrage (2061, 2062), l'insertion du profilé de fixation (200) sur la partie mâle (111) provoquant successivement une poussée déformant l'aile de serrage (2061, 2062) puis un encliquetage de l'aile de serrage (2061, 2062) sur l'aile de réception (1111, 1112).

4. Structure latérale (10) selon l'une quelconque des revendications précédentes, **caractérisée en ce qu'**une deuxième plage d'appui (105) est reliée à une aile de réception (1111, 1112) par le biais d'un angle arrondi formant une gorge (101).

5. Structure latérale (10) selon l'une quelconque des revendications précédentes, **caractérisée en ce qu'**une aile de réception (1111, 1112) comprend une portion soyée (102).

6. Structure latérale (10) selon l'une quelconque des revendications précédentes, **caractérisée en ce que** la première aile de réception (1111) comprend une première terminaison (1041) sensiblement rectiligne, et la deuxième aile de réception (1112) comprend une deuxième terminaison (1042) sensiblement rectiligne, les terminaisons (1041, 1042) étant connectées entre elles de manière à définir un sommet (1043) formant la zone en saillie (1113).

7. Structure latérale (10) selon l'une quelconque des revendications précédentes, **caractérisée en ce qu'**elle comprend un moyen de fixation boulonné et une plaquette (24) dotée d'un orifice (33), le moyen de fixation boulonné comprenant une vis (16) intégrant une tête de vis (19) et une tige (18), la tige (18) traversant l'orifice (33), un trou (206) ménagé sur l'âme (205), et une perforation (106) prévue au niveau de la zone en saillie (1113), de manière à contribuer à verrouiller le profil de fixation (200) sur le profil de support (100), la tête de vis (16) étant disposée contre la plaquette (24) ou la vis (16) est bloquée grâce à un contre-écrou (17) venant se positionner contre la plaquette (24).

8. Structure latérale (10) selon la revendication précédente, **caractérisé en ce que** la tête de vis (19) est hexagonale, le profilé de support (100) étant muni au niveau de la zone de saillie (1113) d'une entaille (20) comprenant des bords (21) confondus avec un plan vertical, l'entaille (20) étant configurée pour permettre le blocage de la tête de vis par les bords (21), les bords (21) comprenant des extrémités à cran (22).

9. Structure latérale (10) selon l'une quelconque des revendications précédentes, **caractérisée en ce que** les parois (110a, 110b) comprennent entre la partie mâle (111) et la première plage d'appui (107), une partie inclinée (108) et une partie de liaison (109), la structure latérale (10) comprend en outre un moyen de renfort (30, 31), placé entre les premières plages d'appui (107), le moyen de renfort (30, 31) étant apte à récupérer un effort visant à rapprocher les parois (110a, 110b) entre elles.

10. Structure latérale (10) selon la revendication précédente, **caractérisée en ce que** le moyen de renfort comprend un pontet (30a) intégrant des pans latéraux (301a) reliés entre eux par un pan central (304a), le pan central (304a) étant pourvu d'un perçage (305a) permettant l'introduction d'une vis de fixation (28) configurée pour coopérer avec un écrou de fixation (29) de sorte à permettre de solidariser le profilé de support (100) sur la structure porteuse (2), les pans latéraux (304a) comprenant des premiers trous alésés (306) coaxiaux avec des deuxièmes trous alésés (307) réalisés dans chaque partie de liaison (109) permettant le passage d'un moyen de serrage configuré pour plaquer respectivement chaque pan latéral (301a) contre une partie de liaison (109).

11. Structure latérale (10) selon la revendication 9, **caractérisée en ce que** le moyen de renfort comprend un pontet (30b) comprenant des pans latéraux (301b) munis de bords retournés (302b) s'insérant dans des fenêtres (303b) prévues à cet effet dans les parties de liaison (109), les pans latéraux (301b) étant liés entre eux par un pan central (304b), le pan central (304b) étant doté d'un perçage (305b) de manière à pouvoir introduire une vis de fixation (28) configurée pour coopérer avec un écrou de fixation (29), permettant de solidariser le profilé de support (100) sur la structure porteuse (2).

12. Structure latérale (10) selon la revendication 9, **caractérisée en ce que** le moyen de renfort comprend une pièce massive (31) pleine intégrant un évidement permettant le passage d'une vis de fixation (28), apte à coopérer avec un écrou de fixation 29, la pièce massive (31) présentant un contour (310) épousant la forme de l'angle entre la partie inclinée (108) et la portion de liaison (109).

13. Structure latérale (10) selon l'une quelconque des revendications précédentes, **caractérisé en ce que** la structure latérale (10) évolue entre une configuration de pré-montage dans laquelle le profilé de fixation (200) est emboîté et encliqueté sur le profilé de support (100) définissant un espace de positionnement formé par une aile de maintien (202) du profilé de fixation (200) et une deuxième plage d'appui (105) du porfilé de support (100), et une configuration de montage dans laquelle le profil de fixation (200) est en butée contre le profilé de support (100), la distance entre l'aile de maintien (202) et la deuxième plage d'appui (105) étant diminuée par rapport à celle définie de la configuration de pré-montage.

14. Ouvrage de protection (1) tel qu'une ombrière comprenant une structure de support (2) selon l'une quelconque des revendications précédentes, une ossature support et de fixation (3) pour panneaux notamment solaires (4), l'ossature support et fixation (3) comprenant une structure latérale (10) permettant la fixation des panneaux notamment solaire (4) sur la structure porteuse (2).
